**Europäisches Patentamt**

**European Patent Office**

**Office européen des brevets**

(19)

(11)  **EP 1 149 060 B1**

(12)  **FASCICULE DE BREVET EUROPEEN**

(45)  Date de publication et mention
de la délivrance du brevet:
**19.05.2004   Bulletin 2004/21**

(21)  Numéro de dépôt: **99958273.7**

(22)  Date de dépôt: **08.12.1999**

(51)  Int Cl.⁷: $C04B\ 35/109$, $C09K\ 3/14$,
$B22D\ 41/32$, $B24D\ 3/14$

(86)  Numéro de dépôt international:
**PCT/FR1999/003057**

(87)  Numéro de publication internationale:
**WO 2000/034201 (15.06.2000 Gazette 2000/24)**

(54)  **GRAINS CERAMIQUES FONDUS ALUMINE-ZIRCONE, OUTILS ABRASIFS ET PIECES REFRACTAIRES PRODUITS A PARTIR DE CES GRAINS**

**KÖRNER AUS GESCHMOLZENEM ALUMINIUMOXID-ZIRKONOXID UND DARAUS HERGESTELLTE SCHLEIFWERKZEUGE UND FEUERFESTE FORMTEILE**

**MELTED ALUMINA-ZIRCONIA CERAMIC GRAINS, ABRASIVE TOOLS AND REFRACTORY PARTS PRODUCED FROM SAID GRAINS**

(84)  Etats contractants désignés:
**AT BE CH CY DE DK ES FI FR GB GR IE IT LI LU MC NL PT SE**

(30)  Priorité:  **09.12.1998  FR 9815527**

(43)  Date de publication de la demande:
**31.10.2001   Bulletin 2001/44**

(73)  Titulaire: **SOCIETE EUROPEENNE DES PRODUITS REFRACTAIRES
F-92400 Courbevoie (FR)**

(72)  Inventeurs:
• **ALEONARD, Bruno, Pascal, Albert
F-84000 Avignon (FR)**

• **ZANOLI, Alain, Paul, Bernard
F-84000 Avignon (FR)**

(74)  Mandataire: **Colas, Jean-Pierre
Cabinet JP Colas,
37, avenue Franklin D. Roosevelt
75008 Paris (FR)**

(56)  Documents cités:
DE-A- 2 246 705        GB-A- 2 090 275
US-A- 3 181 939        US-A- 3 891 408
US-A- 4 457 767        US-A- 5 403 794

**EP 1 149 060 B1**

**Description**

La présente invention concerne un nouveau grain céramique fondu constitué essentiellement d'alumine et de zircone, peu réduit (au sens de l'oxydo-réduction), mais restant compact et conservant de bonnes propriétés mécaniques. L'excellente tenue mécanique et thermique du grain de l'invention le destine particulièrement bien à des applications abrasives, notamment dans les meules à liant vitreux, aussi bien qu'aux applications réfractaires où une bonne tenue à l'oxydation est recherchée.

On classe généralement les outils abrasifs selon le mode de mise en forme des grains céramiques qui les constituent : abrasifs libres (utilisation en projection ou en suspension, sans support), abrasifs appliqués (support de type toiles ou papiers, où les grains sont disposés sur quelques couches) et abrasifs agglomérés (sous forme de meules circulaires, de bâtons etc.). Dans ces derniers, les grains abrasifs sont pressés avec un liant organique ou vitreux (par exemple, un liant constitué d'oxydes, essentiellement silicaté). Ces grains doivent présenter eux-mêmes de bonnes propriétés mécaniques à l'abrasion (ténacité notamment), et donner lieu à une bonne cohésion mécanique avec le liant (solidité de l'interface). On trouve aujourd'hui dans le commerce différentes familles de grains abrasifs permettant de couvrir une large gamme d'applications et de performance : les grains d'oxydes synthétisés par fusion (appelés ici grains fondus) en particulier offrent un excellent compromis qualité / coût de fabrication.

Dans la gamme des grains fondus, des matériaux à base d'alumine et de zircone sont connus de US-A-3 181 939. Ces grains sont généralement composés, en masse, de 10 à 60% de zircone, de 0 à 10% d'un additif, le complément étant l'alumine. En pratique, le taux de zircone des produits du commerce se situe soit autour de 25%, soit de 35 à 50% c'est-à-dire autour de la composition de l'eutectique alumine-zircone située à environ 42% de zircone, comme décrit dans le brevet US-A-3 891 408. Cette dernière référence indique que les produits autour de l'eutectique offrent de meilleures performances abrasives que les grains alumineux surtout s'ils sont solidifiés très rapidement de manière que l'essentiel de la structure soit composé de colonies eutectiques et que, dans les colonies eutectiques, les espaces interlamellaires ou interfibres soient inférieurs à 4000 Å, les colonies eutectiques étant orientées perpendiculairement au front de solidification. Ce type de structure unique réalise, pour les applications abrasives, un excellent équilibre entre la résistance mécanique requise pour une utilisation maximale du grain et la microfracturation en cours d'utilisation nécessaire à une bonne régénération des surfaces de coupe. Par ailleurs, il est connu qu'il est préférable d'utiliser des produits dans lesquels la zircone est présente sous sa forme allotropique quadratique (voire cubique), et non sous forme monoclinique. Des stabilisants, tels que l'oxyde d'yttrium ajouté à raison de jusqu'à 2% selon US-A-4 457 767 ou l'oxyde de titane ajouté à raison de jusqu'à 10% selon DE-C-4306966, sont ainsi connus pour améliorer le pouvoir abrasif des grains alumine-zircone. U.S.-A-4 457 767 décrit un abrasif du type alumine-zircone qui est un produit réduit. Ce produit est de couleur noire et comporte quelques dixièmes de pour cent de $N_2$ et de carbone, comme décrit colonne 1, lignes 30-43. L'oxyde de magnésium a été également cité comme additif possible, mais au-delà d'une teneur de quelques points, sa présence conduit à la formation de spinelle avec l'alumine jusqu'à disparition du corindon, d'où une moindre performance mécanique.

Les grains alumine-zircone sont aussi des grains de choix pour des applications réfractaires, en particulier pour la fabrication des busettes ou plaques à tiroir employées dans la coulée continue de l'acier. Les grains sont incorporés dans des matrices contenant souvent du carbone (produits « noirs »), mais également dans des matrices d'oxydes (produits « blancs », frittés), notamment d'alumine. Pour les applications réfractaires, la résistance aux traitements thermiques est essentielle, que ce soit pendant la mise en forme des pièces ou en service. En conséquence, outre la nécessité de présenter de faibles dilatations thermiques (afin de minimiser les contraintes sur la matrice), le grain doit posséder après calcination des propriétés mécaniques suffisantes pour ne pas conduire lui-même à la ruine de la pièce. Ces exigences positionnent très avantageusement les grains d'alumine-zircone contenant, comme pour les applications abrasives, autour de 25 ou de 42% de zircone. Les compositions à 42% de zircone en particulier présentent une bonne tenue mécanique, une faible dilatation thermique ainsi qu'une bonne résistance à la corrosion. Cette dernière est améliorée sur des produits à base de grains compacts et exempts de fissurations. En effet, pores et fissures constituent à l'application des zones de pénétration des liquides en fusion, et donc de corrosion, privilégiées. Bien entendu, la bonne tenue mécanique du matériau nécessite également une faible teneur en défauts, comme les pores ou les fissures. A cet effet, afin d'éviter les changements de volume, et les fissures associées, induits par la transformation en température de la zircone monoclinique, la zircone peut être stabilisée par l'ajout de dopants, comme les oxydes de titane ou d'yttrium, combiné ou non avec une trempe du produit, qui elle favorise la stabilisation de la zircone sous forme quadratique, voire cubique.

Du point de vue du procédé, le matériau est élaboré par fusion de matières premières de puretés variables dans des conditions réductrices, avec notamment ajout d'une source de carbone (coke de pétrole, brai ou charbon) dans le four. On préfère en général procéder à un refroidissement rapide pour favoriser l'obtention de structures fines et orientées en mettant en oeuvre des dispositifs, tels que celui décrit dans US-A-3 993 119, de coulée entre plaques minces métalliques. Enfin, le matériau produit est broyé, par exemple sur des broyeurs à rouleaux, puis tamisé et classifié en séries de distributions granulométriques (« grits ») répondant à des normes précises (par exemple FEPA).

**EP 1 149 060 B1**

L'élaboration en conditions réductrices contribue à réduire la teneur en impuretés du produit coulé et permet l'obtention d'un matériau compact à bonnes propriétés mécaniques. D'autres effets bénéfiques peuvent être invoqués, notamment sur la stabilisation de la zircone quadratique (voir DE-C- 4 306 966). En tout état de cause, les qualités préférées pour les applications (meules organiques, abrasifs appliqués ou réfractaires « noirs ») dans l'art antérieur sont toujours réduites et contiennent de ce fait du carbone, des sous-oxydes et/ou des espèces métalliques ou carburées. US-A-3 891 408 indique clairement que les produits les moins réduits [donnés à moins de 0,5% (5000 ppm) de carbone] présentent de plus faibles performances abrasives. US-A-5 143 522 mentionne des produits contenant de 300 à 5000 ppm de carbone (exemples selon l'invention) et 100 ou 200 ppm (exemples comparatifs moins performants). Ces teneurs élevées témoignent de l'état réduit des grains : elles garantissent de bonnes performances, que ce soit dans les abrasifs appliqués ou en meules à liant organique.

L'utilisation de ces grains alumine-zircone réduits pour la production de meules à liant minéral vitreux n'a, toutefois, pas connu de succès en raison d'une incompatibilité de ces grains avec les liants vitreux typiquement utilisés dans les abrasifs agglomérés et, à la connaissance de la Demanderesse, il n'existe aucun article de ce genre sur le marché. Les meules à liant minéral vitreux, disponibles actuellement dans le commerce, sont produites à partir de grains de corindon fondus ou frittés.

D'après les études menées par la Demanderesse, l'incompatibilité entre les grains et le liant vitreux est liée à l'état très réduit de ces grains. En effet, nous avons trouvé qu'un grain céramique trop réduit réagit lors de la cuisson des meules vitrifiées en libérant des bulles dans le liant, ce qui affaiblit notablement les propriétés mécaniques de la meule. Un grain fortement réduit conduit même à une expansion volumique importante de la meule, immédiatement perceptible à l'oeil. Sans vouloir être liés à une théorie quelconque, nous pensons que le contact en atmosphère oxydante et à haute température (plus de 900°C pendant plusieurs heures) d'un produit sous-oxydé à base d'alumine et de zircone avec un ensemble d'oxydes de stabilité moindre (comme les liants silicatés) donne lieu naturellement à des réactions rédox, s'accompagnant de dégagements gazeux et/ou de fortes dilatations fragilisant le grain et son interface avec le liant de la meule. De façon analogue, pour les applications réfractaires, la résistance à la réoxydation du grain est un aspect particulièrement important, à la fois dans l'élaboration (pour les réfractaires « blancs ») et durant l'utilisation (oxydation par les laitiers pour tous les réfractaires d'aciérie) . Les grains réduits ne conviennent pas pour les utilisations en produits blancs, étant, en effet le siège de fracturations multiples et de dilatations volumiques rédhibitoires durant la mise en oeuvre des pièces. Plus généralement, pour l'ensemble des réfractaires d'aciérie, les grains réduits ne favorisent pas la résistance à l'oxydation par les laitiers.

Afin de surmonter ces problèmes, nous avons pensé à produire des grains fondus alumine-zircone moins réduits.

Une première approche a consisté à faire subir à des matériaux « classiques » (réduits) un traitement thermique sous atmosphère oxydante, une fois solidifiés. Cependant, nous avons observé que ceci entraîne une chute de la performance desdits grains à un point où on ne tire plus aucun bénéfice du matériau d'alumine-zircone ; les tests mécaniques montrent (voir exemples) en effet que les grains classiques ainsi traités ont des performances bien moindres que celles des produits fondus en corindon de référence. Ceci vient confirmer des essais ponctuels relatés dans US-A- 3 891 408 ou DE-C-4306966 qui indiquent effectivement une chute de performance liée à un traitement thermique.

Une seconde approche a consisté à oxyder le bain de fusion avant la coulée par des techniques connues telles que le réglage de l'énergie de fusion pour les fours ouverts à l'air libre- (le produit obtenu sera d'autant plus oxydé que l'énergie fournie lors de la fusion sera importante), l'ajustement de la longueur des arcs, l'insufflation de gaz oxydants... Cependant nous avons constaté que de telles conditions d'élaboration conduisent généralement à des matériaux poreux, ce qui provoque une baisse des performances mécaniques de ces matériaux.

En variante, le liquide fondu peut être oxydé à la solidification, notamment par dispersion à l'air. Cependant, la réoxydation d'un liquide réduit produit des boursouflures (de la porosité) à la surface en contact avec l'air ambiant pendant la solidification, que ce soit sur des granulats obtenus par dispersion à l'air ou à la surface supérieure des moules de coulée.

Enfin, on peut noter que pour pallier le problème de la porosité une autre solution possible serait l'ajout de quelques pourcents de silice dans la composition. Il apparaît ainsi une phase silicatée qui permet de réduire la porosité. Cependant la présence de silice est néfaste aux propriétés mécaniques des grains. US-A-3 891 408 et US-A-5 143 522 indiquent d'ailleurs que des quantités notables de $SiO_2$ (1 % maximum pour ces deux brevets) ou $Na_2O$ (0,1 % maximum) sont à éviter.

Les approches présentées ci-dessus sont les plus simples à mettre en oeuvre mais, malheureusement, les produits qui en découlent ne présentent pas les caractéristiques requises.

De façon surprenante, nous avons trouvé que des grains alumine-zircone fondus à propriétés supérieures peuvent être obtenus avec un réglage approprié et fin des conditions d'élaboration de la fusion.

Nous avons en effet observé qu'il existe une plage d'état d'oxydo-réduction où les grains d'alumine-zircone fondus peuvent être obtenus compacts et peu réduits, avec de bonnes propriétés mécaniques. De plus, on constate

3

que les grains de l'invention possèdent une teneur en zircone quadratique proche de celle des produits "classiques" réduits.

Toute granulométrie des grains ("grit") indiquée ci-après est donnée en numéro de grain conformément à la norme FEPA "F".

Plus particulièrement, l'invention concerne des grains d'alumine-zircone fondus présentant l'analyse chimique suivante, en % en masse :

$ZrO_2$ + $HfO_2$ :  10-60%, de préférence 35-50% et avantageusement 38-45%
$Al_2O_3$ :  38 à 90%, de préférence 48-65% et avantageusement 53-62%
$SiO_2$ :  < 0,8%, de préférence < 0,4%
Impuretés :  < 1,2%

caractérisés en ce qu'ils présentent un état légèrement réduit tel que lesdits grains contiennent moins de 100 ppm de carbone, de préférence moins de 50 ppm de carbone, et présentent :

a) une porosité, définie par le nombre de pores d'une taille supérieure à 20 $\mu$m, au plus égale à 6 pour des grains de numéro F24 (norme FEPA "F"), 2 pour des grains de numéro F60 et 1 pour des grains de numéro F100,
b) une ténacité, telle que définie ci-après, d'au moins 2,5MPa.m$^{1/2}$ après calcination à 900°C sous air pendant 4 heures.

Note : les teneurs en oxydes données ci-dessus se rapportent en fait aux teneurs globales pour chacun des éléments chimiques correspondants, exprimées sous la forme de l'oxyde le plus stable, selon la convention habituelle de l'industrie ; sont inclus donc les sous-oxydes et éventuellement nitrures, oxynitrures, carbures, oxycarbures, carbonitrures, ou même les espèces métalliques des éléments susmentionnés.

De préférence, les grains de l'invention présentent, en outre, une résistance à l'impact après calcination à 900°C sous air pendant 4 heures, telle que définie par l'essai défini dans la description, au moins égale à 40 pour des grains de numéro F24, à 50 pour des grains de numéro F60 et à 60 pour des grains de numéro F100.

Facultativement, les grains de l'invention peuvent contenir jusqu'à 10% en masse, de préférence jusqu'à 3% en masse, d'au moins un additif, la proportion de cet additif venant en substitution d'une partie de $Al_2O_3$.

De préférence, les grains de l'invention ont un numéro de grain allant de F12 à F120 selon la norme FEPA "F".

De préférence également, les grains de l'invention présentent une teneur en espèces réduites telle qu'ils libèrent, dans le test d'attaque acide défini ci-après, moins de 50 cm$^3$ d'hydrogène par 100 g de grains, avantageusement moins de 25 cm$^3$/100 g.

Bien que la teneur en carbone puisse être théoriquement nulle, elle sera, dans la plupart des cas, d'au moins 10 ppm.

Le terme « additif » recouvre les additifs utilisés usuellement dans les produits alumine-zircone, notamment les stabilisants de la zircone, tels que l'oxyde d'yttrium, l'oxyde de titane, l'oxyde de magnésium, l'oxyde de calcium et des oxydes de terres rares, par exemple de néodyme, de lanthane, de cérium, de dysprosium et d'erbium. Le terme comprend également les mélanges de ces oxydes. L'oxyde d'yttrium est un additif particulièrement préféré, de préférence en une proportion de 0,3 à 2% en masse. En ce qui concerne l'oxyde de titane, et l'oxyde de magnésium, les proportions préférées sont de 1-3% et 1-2% en masse, respectivement.

Par « impuretés » on entend tout composé autre que ceux déjà mentionnés, en particulier ceux faisant parti du groupe des oxydes, nitrures, oxynitrures, carbures, oxycarbures, carbonitrures de sodium et autres métaux alcalins, de fer, et de vanadium ainsi que lesdits métaux sous forme métallique. L'oxyde d'hafnium, naturellement présent dans les sources de zircone à des teneurs inférieures à 2% par rapport à la zircone, n'est pas considéré comme une impureté. Les teneurs en zircone exprimées ici, déterminées par fluorescence des rayons X, incluent l'oxyde d'hafnium.

Le caractère peu réduit des grains de l'invention garantit, comme nous l'avons mis en évidence, une bonne compatibilité avec les liants minéraux vitreux utilisés pour les meules vitrifiées, et les matrices d'oxydes utilisés pour les applications réfractaires. Les grains de l'invention sont potentiellement utiles dans toute autre application où un matériau alumine-zircone résistant à l'oxydation peut être bénéfique, plus particulièrement toute application où le produit est exposé à l'air à des températures supérieures à 700°C. Grâce à leur compacité (par contrôle de l'élaboration) et à leur ténacité, les grains de l'invention présentent des propriétés de résistance à l'impact, supérieures à celles des grains alumineux fondus. Celles-ci les rendent donc toujours intéressants pour les applications classiques des grains alumine-zircone : meules à liant organique et abrasifs appliqués, projection/sablage, polissage avec suspensions, et réfractaires « noirs ».

L'invention concerne également des outils abrasifs constitués de grains abrasifs liés par un liant ou déposés en couche sur un support souple et retenus par un liant, caractérisés en ce qu'au moins une partie des grains abrasifs sont conformes à l'invention. Des exemples de tels outils sont des meules, des papiers abrasifs ou des toiles abrasives.

L'invention concerne, en outre, des pièces réfractaires constituées de grains d'alumine-zircone incorporés dans une matrice, caractérisées en ce que les grains d'alumine-zircone sont, au moins en partie, conformes à l'invention. L'invention concerne, enfin, l'utilisation desdites pièces réfractaires dans la coulée continue de l'acier, notamment comme plaques à tiroir.

Les exemples qui vont suivre sont donnés dans le but d'illustrer l'invention mais ne sont en aucun cas limitatifs. Pour ces exemples, nous avons choisi de travailler avec deux types de grains, ceux ayant une teneur en zircone de 35 à 50 % en poids, appelés ci-après produits à environ 42% de zircone (valeur proche de la valeur eutectique), et ceux ayant une teneur en zircone inférieure à 35% en poids, appelés ci-après produits à environ 25% de zircone.

Exemples 1-12 (produits à 42% environ de zircone)

Nous avons tout d'abord étudié les grains alumine-zircone sans additif afin de mettre en évidence les avantages offerts par l'invention même sans ajout de stabilisant. Puis nous avons utilisé des stabilisants, en l'espèce les oxydes d'yttrium, de titane et de magnésium. Les teneurs pour ces derniers (dans le cas de produits à environ 42% de zircone) sont respectivement centrées autour de 0,7%, 2,7% et 1,8%: les deux premières valeurs sont des valeurs typiques des produits (réduits) du commerce considérées comme préférées dans US-A-4 457 767 (valeur haute de la revendication 2) et DE-C-4306966 (exemple 4) respectivement, toutes deux garantissant de fortes teneurs en zircone quadratique ; la teneur en magnésie réalise un bon compromis entre une stabilisation efficace de la zircone et une présence de phase spinelle encore peu importante. Dans le cas des compositions autres que celles à environ 42% de zircone, on ajuste la teneur en stabilisant proportionnellement au taux de zircone global.

Les produits donnés en exemples ont été élaborés à partir des matières premières suivantes : alumine Bayer sous-calcinée à basse teneur en soude (<0,3%), matériau zirconifère CC10 à fortes teneurs en zircone+hafnium (>98%) disponible auprès de la Demanderesse, coke de pétrole, et copeaux d'aluminium métallique. Les additifs sont apportés par des matières pures à plus de 96% dans l'oxyde correspondant.

Les analyses chimiques des produits obtenus sont données dans le tableau 1. Les produits ont été préparés suivant les modes opératoires décrits ci-dessous :

- pour les exemples 1, 2, 3, 4 : (dits « produits réduits »)
  la fabrication a été réalisée suivant le mode classique bien connu de l'homme de l'art : mélange des matières premières, fusion dans un four à arc électrique monophasé de type Héroult à électrodes en graphite- avec une cuve de four de 0,8 m de diamètre, une tension de 160-175 V (arcs courts) et une énergie électrique spécifique fournie de 2,0 à 2,6 kWh/kg chargé. On introduit dans la composition chargée au minimum 2% (jusqu'à 2,8% et plus) de coke de pétrole selon l'état du four et environ 2,5% de copeaux d'aluminium. Le liquide en fusion est ensuite brusquement refroidi grâce à la machine décrite dans US-A-3 993 119. Les grains sont ensuite broyés et classés selon leur granulométrie ; on retient des granulométries comprises entre F 24 et F 100 c'est-à-dire des grains de taille médiane supérieure à 100 µm. Les grains caractérisés dans ces exemples et les suivants ont tous une densité apparente (à l'état non tassé) typiquement comprise entre 1,9 et 2 en F24, 1,75 et 1,85 en F60, et 1,7 et 1,8 en F100, ce qui correspond à des grains broyés simplement et sans traitement de forme (concassage en broyeur à mâchoires et passage -2 à 3 passes-- au broyeur à rouleaux). Cette densité apparente est déterminée en remplissant un récipient de volume connu, tout en évitant les vibrations, avec les grains à mesurer en laissant tomber librement les grains dans le récipient. On détermine la masse des grains contenus dans le récipient. La densité apparente est le quotient de cette masse par la masse d'eau équivalente au volume du récipient.
- pour les exemples 5, 6, 7, 8 : (dits « produits de l'invention »)
  les matières premières ont été mélangées, puis fondues dans un four à arc électrique de même type que précédemment, une tension de 175-205 V (arcs longs) et une énergie électrique spécifique fournie d'environ 2,7 à 3,3 kWh/kg chargé. Ce dernier chiffre peut être moins élevé dans le cas d'une cuve de taille industrielle (jusqu'à 2 kWh/kg chargé) selon les conditions thermiques du four. On introduit dans la composition chargée environ 0,8% de coke, avec environ 2,5% d'aluminium métallique selon la configuration préférée. Le taux d'introduction des réducteurs dépend également de la teneur en impuretés (notamment oxydes de sodium et de silicium) des lots de matières premières et on pourra en conséquence réajuster sur une certaine plage l'énergie de fusion à appliquer. Le liquide en fusion est ensuite brusquement refroidi dans un moule métallique comme indiqué précédemment. En pratique, on essaie de se positionner en oxyde-réduction de telle sorte que les écailles recueillies soient compactes (inspection visuelle, pesée hydrostatique à ramener à la densité attendue) tout en restant de couleur claire (éviter les couleurs foncées, caractéristiques -sauf dans le cas de l'ajout d'oxyde de titane- d'une réduction trop avancée). Les grains sont ensuite broyés et classés selon leur granulométrie.
- pour les exemples 9, 10, 11, 12 : (dits « produits poreux »)
  Les produits ont été obtenus par fusion des matières premières en conditions plus oxydantes. On opère au-dessus de 190 V avec une énergie de fusion spécifique supérieure à 3 kWh / kg chargé. On introduit 0,8% de coke au maximum dans la composition chargée dans le four, soit le minimum nécessaire pour assurer une réduction dans un premier temps des impuretés et notamment des oxydes de sodium et de silicium. On n'introduit pas d'aluminium. On peut opter pour une oxydation par insufflation de gaz dans le bain de fusion, mais celle-ci ne diminue en rien l'apparition de porosité. Le liquide en fusion est ensuite brusquement refroidi comme indiqué précédemment. Les grains sont ensuite broyés et classés selon leur granulométrie.

Les grains obtenus sont caractérisés chimiquement, hors teneur en carbone, par fluorescence des rayons X. Le taux de carbone reflète directement (en parallèle du test d'attaque acide) l'état d'oxydo-réduction. Il est mesuré par absorption infrarouge (appareil LECO, modèle CS300). Pour ce faire, on broie le produit après séparation magnétique dans un bol de broyage exempt de carbone (par exemple en alumine-zircone-silice fondue) jusqu'à l'obtention d'une poudre passant au tamis de 160 μm. On veille en particulier à éviter tout contact du produit avec des sources de carbone (mains de l'opérateur, papier) ; la poudre est transférée directement dans le pot pour analyse. On suit enfin la procédure d'analyse LECO en portant la poudre à 1600-1650°C sous courant d'oxygène, avec un fondant et un accélérateur de combustion.

Le test d'attaque acide consiste à doser l'hydrogène gazeux dégagé par attaque à chaud du produit avec un mélange d'acide chlorhydrique et fluorhydrique. On mesure ainsi l'importance de la réoxydation des espèces sous-oxydées (sous-oxydes, jusqu'au métal).

Pour ce faire, on broie le produit, après séparation magnétique, dans un bol de broyage fait de matériau oxydé (par exemple, une alumine-zircone-silice fondue) jusqu'à obtention d'une poudre passant au tamis de 160 μm. On prélève de 2 à 10g de produit que l'on place dans un réacteur en polypropylène d'environ 100 cm$^3$. On ajoute ensuite 25 ml du mélange d'acide suivant : (pour un litre) 250 ml de HF à 40%, 375 ml de HCl à 37%, enfin 375 ml d'eau. Après fermeture du réacteur, on réalise l'attaque à 80°C environ au bain-marie pendant 15 minutes en agitant de temps à autre. Après refroidissement du réacteur, on prélève à l'aide d'une seringue au travers d'un septum environ 0,5 ml que l'on injecte dans un chromatographe en phase gazeuse en détection catharomètre (avec pour la colonne de séparation un tamis moléculaire de 5 Å et de l'argon pour gaz vecteur). On exprime le résultat en volume de gaz en conditions normales pour 100g de produit.

L'ensemble des données d'analyse chimique et d'oxydo-réduction est rassemblé dans le Tableau 1.

## TABLEAU 1

| N° exemple | 1* | 2* | 3* | 4* | 5 | 6 | 7 |
|---|---|---|---|---|---|---|---|
| ZrO₂ (% masse) | 39,6 | 41,9 | 38,8 | 39,5 | 38,8 | 41,4 | 40,6 |
| SiO₂ (% masse) | 0,12 | 0,16 | 0,19 | 0,24 | 0,19 | 0,19 | 0,22 |
| Na₂O (% masse) | 0,08 | 0,06 | <0,05 | 0,09 | 0,09 | 0,08 | <0,05 |
| Y₂O₃ (% masse) | / | 0,76 | / | / | / | 0,81 | / |
| TiO₂ (% masse) | / | / | 2,18 | / | / | / | 2,59 |
| MgO (% masse) | / | / | / | 1,85 | / | / | / |
| Al₂O₃ (% masse) | compl. | compl. | compl. | compl. | compl. | compl. | compl. |
| Carbone (ppm) | 180 | 145 | 200 | 220 | 60 | 45 | 95 |
| H₂ (cm³/100g) | 82 | 48 | 73 | 60 | 30 | 21 | 44 |

| N° exemple | 8 | 9* | 10* | 11* | 12* | Réf. |
|---|---|---|---|---|---|---|
| ZrO₂ (% masse) | 40,6 | 42,1 | 41,2 | 41,2 | 41,7 | / |
| SiO₂ (% masse) | 0,29 | 0,15 | 0,21 | 0,28 | 0,36 | 0.10 |
| Na₂O (% masse) | 0,13 | 0,06 | 0,09 | 0,08 | 0,22 | < 0.05 |
| Y₂O₃ (% masse) | / | / | 0,75 | / | / | / |
| TiO₂ (% masse) | / | / | / | 2,98 | / | 0.4 |
| MgO (% masse) | 1,90 | / | / | / | 1,66 | < 0.05 |
| Al₂O₃ (% masse) | compl. | compl. | compl. | compl. | compl. | compl. |
| Carbone (ppm) | 50 | 40 | 20 | 30 | 45 | / |
| H₂ (cm³/100g) | 26 | 16 | 14 | 14 | 7 | / |

\* : exemple en dehors de l'invention.

/ : signifie qu'on n'a pas ajouté volontairement de cet oxyde mais que la composition peut contenir ≤ 0,20% en masse de Y₂O₃ ou TiO₂ et ≤ 0,06% en masse de MgO, en provenance des matières premières utilisées.

Le grain de référence est un grain alumineux fondu, commercialisé sous l'appellation 32A par la Société SAINT-GOBAIN INDUSTRIAL CERAMICS et actuellement reconnu comme grain de référence pour des applications en meules vitrifiées.

Afin de caractériser les propriétés mécaniques des grains à la fois utilisés seuls et avec un liant vitreux, nous avons eu recours aux trois tests A, B et C décrits ci-après :

A) Détermination de la résistance à l'impact :

Le test vise à déterminer la fraction de grains survivants d'une tranche granulométrique donnée après une sollicitation dans un bol de broyage en acier : il constitue une évaluation en dynamique de la résistance mécanique des grains.

I - Préparation des grains pour le test :

1 - Tamisage de la fraction à tester :

- 710/850 µm pour représenter le grain de numéro F24 ;
- 300 / 355 µm pour représenter le grain de numéro F60 ;
- 150/180 µm pour représenter le grain de numéro F100.

Ce tamisage est réalisé sur une tamiseuse vibratoire de type ROTAP, standard dans l'industrie.
2 - Déferrage de l'échantillon avant le test par séparation magnétique.
3 - Etuvage de l'échantillon à 150°C durant 15 minutes et refroidissement dans un dessiccateur.

II - Matériel utilisé pour le test :

1 - Le broyeur tournant AUREC type T100 couramment utilisé pour le broyage de poudres pour analyses chimiques. Celui-ci est monté sur suspensions (6 ressorts) et met en mouvement un bol cylindrique creux contenant les grains et un palet libre glissant. Les grains sont sollicités uniquement par les impacts du palet.
2 - Un bol de broyage en acier (nuance Z160 C 12) aux dimensions suivantes : hauteur de 18 mm, diamètre intérieur de 139 mm.
3 - Un palet cylindrique creux (diamètre 75 mm, hauteur 46 mm avec une épaisseur de paroi de 10 mm) de la nuance Z200C12 et de masse 889 g.

III- Test de résistance à l'impact :

1 - Nettoyage du bol à l'air comprimé.
2 - Un lot de 25 grammes de produit à tester dans la tranche granulométrique concernée est introduit entre la paroi et le palet du bol de broyage. Le broyeur AUREC est mis en route à sa vitesse nominale (1400 tours/ mn) pour une durée de 40 secondes. La poudre et les grains sont ensuite extraits du bol de broyage à l'aide d'un pinceau (n° 50) pour analyse de la répartition granulométrique. Le produit est ainsi introduit dans une série de tamis de 200 mm de diamètre. Le tout est laissé sur la tamiseuse ROTAP pendant 12 minutes, avec les tamis Ti suivants :

| N° de grain | Tranche Testée | Tamis utilisés (ouverture en µm) | | | | | |
|---|---|---|---|---|---|---|---|
| | | T1 | T2 | T3 | T4 | T5 | T6 |
| F24 | 710/850 µm | 710 | 600 | 425 | 250 | 106 | 40 |
| F60 | 300/355 µm | 300 | 250 | 125 | 75 | 40 | |
| F100 | 150/180 µm | 150 | 125 | 75 | 40 | | |

IV - Mesure de la résistance à l'impact :
La valeur de la résistance à la fracture est donnée par la somme des refus des deux premiers tamis (710 µm + 600 µm, par exemple dans le cas de la tranche 710/850 µm). Cette valeur est exprimée en pour-cent de la masse initiale introduite dans le bol de broyage. La totalisation des refus T1 + T2 indique la résistance du matériau.

B) Détermination de la ténacité par indentation, selon des procédures standard pour les oxydes :

I - On réalise un enrobage de grains (de préférence du grain de numéro F24 pour éviter les phénomènes de glissement grain / enrobage, mais la ténacité est en fait une valeur locale intrinsèque, indépendante du numéro de grain choisi). On utilise pour l'enrobage de la résine époxy Epomet noire, réf. N° 203 380 064, vendue par la Société BUEHLER.

II - On vient indenter (aléatoirement dans la structure, à plus de 60 µm du bord des grains enrobés et chaque fois sur un grain différent) par un diamant Vickers, chargé à 500g à une vitesse de 0,5 µm/s.

III - On évalue la longueur des fissures obtenues (fissures radiales nettes à partir des quatre coins de l'empreinte d'indentation) ; un matériau très fragile, de ténacité largement inférieure à 2,5MPa.m$^{1/2}$, donne lieu, aux charges considérées, à une multifissuration ou à un écaillage en bord d'empreinte catastrophique, ce qui empêche un calcul de ténacité rigoureux. Ne sont prises en compte pour l'estimation de la ténacité que les empreintes à bord rectiligne (absence d'écaillage), dont les coins forment le point de départ de fissures simples sans fissurations multiples ni fissures en boucle entre deux bords d'empreinte (écaillage). Un échantillon donnant lieu à 5 empreintes correctes (sur au maximum 15 essais) donne lieu à un calcul de ténacité (moyenne des 5 valeurs) ; on considère que l'échantillon donne lieu à de la multifissuration catastrophique dans le cas contraire. Les empreintes manifestement entachées d'une erreur de manipulation (notamment défaut de planéité du polissage) ne sont pas considérées dans le nombre d'essais.

IV - La ténacité du matériau est donnée par la formule classique suivante, due à Liang :

$$K_{IC} = 0.5173 \left( \frac{Ha^{1/2}}{alpha} \right) \left( \frac{E}{H} \right)^{0.4} \left( \frac{c}{a} \right)^{\left( \frac{c}{18a} \right) - 1.51}$$

$$alpha = f(v) = 14 \left[ 1 - 8 \left( \frac{4v - 0.5}{1 + v} \right)^4 \right]$$

où :

v est le coefficient de Poisson du matériau, pris à 0,27.

E est le module d'Young. Celui-ci est évalué à 300 GPa pour un matériau à 42% de zircone, 350GPa pour un matériau à 25% de zircone (valeurs effectivement mesurées), et entre ces deux points fixes, on applique pour les exemples cités, une loi de variation proportionnelle à la teneur en zircone.

H est la dureté du matériau, homogène à une pression, estimée à partir de la taille d'empreinte de la façon classique, mais à des charges plus faibles pour éviter la fissuration du matériau. On a recours à un appareil de nano-indentation muni d'une pointe Berkowich chargée à 50 g avec une vitesse de descente à charge imposée de 10 mN.S$^{-1}$. On utilise le même enrobage que pour la ténacité.

a est la taille d'empreinte (moyenne des demi-diagonales).

c est la longueur moyenne de fissure, comptée à partir du centre de l'empreinte.

Pour ces deux tests sur grains les produits sont calcinés au préalable afin de rendre compte de leurs conditions d'utilisation et/ou de mise en oeuvre. Le cycle de calcination choisi est un échelon de température sous air de 20°C-900°C-20°C avec un palier de 4 h à 900°C.

C) Une autre procédure évalue la qualité mécanique de l'interface grains / liant de meules vitrifiées.

Nous avons donc mis en forme les grains avec un liant silicaté traditionnel, selon des méthodes connues de l'homme de l'art (cuisson à 900°C). On a réalisé de petites barrettes dont les modules de rupture (MdR) sont évalués en flexion trois points, selon la formule (MdR en MPa) : 3FL/2e$^2$l

où :

F = force en Newtons

L = entraxe des rouleaux inférieurs en mm

e=épaisseur de l'éprouvette en mm

l = largeur de l'éprouvette en mm

De faibles valeurs du MdR traduisent une tendance à la rupture et à la friabilité et entraînent un mauvais comportement à l'application, voire à un éclatement de la meule (aspect sécurité).

Enfin, il a été nécessaire de définir un critère de porosité sur grains adapté aux tailles de grains considérées et aux niveaux de porosité recherchés.

I - Préparation des grains pour le test :

1 - Tamisage de la fraction à tester :

- 710-850 µm pour représenter le grain de numéro F24 ;
- 250-300 µm pour représenter le grain de numéro F60 ;
- 106-180 µm pour représenter le grain de numéro F100.

Ce tamisage est réalisé sur tamiseuse standard LABO-MODERNE.

2- Déferrage de l'échantillon avant le test.

3- Etuvage de l'échantillon à 150°C durant 15 minutes et refroidissement dans un dessiccateur.

4- Enrobage de 1 gramme de grains dans la résine ARALDITE à l'aide de la machine d'enrobage BUEHLER PNEUMET 3.

5- Polissage des enrobages sur un disque de feutre sur lequel on dépose de la pâte diamantée PRESI MECAPREX D.E. 1 µm et du diluant D.E. ROUGE pour pâte diamantée. Le polissage doit être doux et dure environ 2 heures. Procéder par étapes de 15 à 20 minutes environ afin de permettre aux contraintes exercées sur les grains de se relâcher. Le polissage peut être éventuellement fini à la pâte diamantée PRESI MECAPREX D.E. ¼ µm afin d'enlever les dernières rayures. Ce mode de polissage extrêmement fin vise à minimiser les effets d'arrachement qui pourraient être confondus avec de la porosité.

6 - Passage de l'échantillon poli dans un bac à ultrasons BIOBLOCK 88155 pendant une dizaine de minutes.

II - Matériel utilisé pour la mesure :

Microscope optique REICHERT POLYVAR 2.

III - Comptage des pores :

1 - Nettoyage de l'échantillon poli à l'air comprimé.

2 - Un échantillon poli de produit à tester dans la tranche granulométrique concernée est introduit sous le microscope. On choisit une lumière réfléchissante. Le grossissement du microscope est adapté en fonction de la tranche granulométrique étudiée (v. tableau ci-dessous).

| N° de grain | Tranche granulométrique | Grossissement |
|---|---|---|
| F24 | 710-850 µm | x 50 |
| F60 | 250-300 µm | x 100 |
| F100 | 106-180 µm | x 200 |

3 - A l'aide du réticule du microscope, une zone d'étude est délimitée. Cette zone doit compter de 10 à 20 grains. La mesure s'effectuera sur cinq zones du même type par échantillon.

4 - Le nombre de pores et le nombre de grains par zone est compté en tenant compte des critères permettant d'éliminer l'arrachement dû au polissage (détails des critères dans le tableau ci-dessous).

| 1 - | seuls les pores dont le diamètre du cercle circonscrit est supérieur à 20 µm sont pris en compte ; nous considérons en effet que ce sont les seuls qui jouent un rôle significatif dans l'affaiblissement mécanique des grains. |
|---|---|

(suite)

| 2 - | des pores dont le diamètre est compris entre 20 et 50 μm, seuls ceux parfaitement sphériques sont comptés ; |
|---|---|
| 3 - | si les pores sphériques forment une ligne ou une courbe, ils sont rejetés car dus à l'arrachement pendant le polissage ; |
| 4 - | si les pores sphériques se situent à la jonction entre deux phases (eutectique-alumine primaire), alors ils sont considérés comme de l'arrachement; |
| 5 - | pour les pores supérieurs à 50 μm, on s'accorde un facteur de forme moins précis, on considère comme un pore toute forme bien définie allant de la sphère à l'ovoïde. Les pores supérieurs à 50 μm sont plus souvent soumis à l'arrachement mais restent suffisamment réguliers pour que l'on ne les confonde pas avec de l'arrachement pur et simple. C'est pourquoi on se permet une plus grande flexibilité vis-à-vis de ces pores. |

IV - Estimation de la porosité des grains :

La porosité est estimée par le rapport du nombre de pores au nombre de grains. Le nombre de pores et le nombre de grains sont obtenus par la somme de toutes les zones de l'échantillon. La valeur de la porosité est exprimée en nombre de pores par grain. Les études de reproductibilité effectuées ont donné une précision de mesure de 5%.

Cette procédure se prêterait tout à fait à une méthode d'analyse d'image.

Nous avons tout d'abord étudié la tenue thermique des produits réduits. Les exemples 1, 2, 3 et 4 ainsi que le produit de référence ont été portés à 900°C pendant 4 heures sous air, simulant l'influence sur le grain céramique même de la cuisson d'une meule par une calcination au profil de température semblable. Les températures d'élaboration sont a fortiori supérieures pour des pièces réfractaires à matrice d'alumine frittée. Nous avons ensuite testé, dans les mêmes conditions, la résistance à l'impact ainsi que la ténacité par indentation des produits issus de ce traitement thermique oxydant, et ce dans les grains de numéro F 24, 60 et 100. Le Tableau 2 rassemble les résultats obtenus.

TABLEAU 2

| N° exemple | 1* | 2* | 3* | 4* | Réf. |
|---|---|---|---|---|---|
| C (ppm) | 180 | 145 | 200 | 220 | - |
| $H_2$ (cm$^3$/100g) | 82 | 48 | 73 | 60 | - |
| Après calcination | | | | | |
| Test d'impact, F24 (% refus) | 0,1 | 28 | 9 | 8 | 50 |
| Test d'impact, F60 (% refus) | 15 | 35 | 45 | 45 | 71 |
| Test d'impact, F100 (% refus) | 38 | 37 | 42 | 54 | 75 |
| Ténacité par indentation (MPa. m$^{1/2}$ ) | multifissuration | multifissuration | multifissuration | multifissuration | 2,7 |

On remarque que le traitement thermique fait perdre, et de façon patente dans tous les cas, les avantages des produits à base d'alumine-zircone par rapport à la référence, que ce soit en ténacité ou résistance mécanique au test d'impactage. En effet, un grain yttrié du type de l'exemple 2 donnerait avant calcination des valeurs supérieures à 70% au test d'impactage, et cela dans les granulométries F24, 60 et 100 ; de plus, sa ténacité serait supérieure à 4 MPa.m$^{1/2}$. Par rapport aux résultats sur le grain de référence, nous avons choisi d'écarter les grains pour lesquels la résistance à l'impact est inférieure à 40 en grain de numéro F24, à 50 en grain de numéro F60 et à 60 en grain de numéro F100. Pour la ténacité, nous nous fixons comme valeur seuil 2,5 MPa.m$^{1/2}$, en deçà de laquelle, on n'obtient même pas la ténacité d'un grain de corindon fondu haut de gamme.

Nous avons ensuite mis en évidence la relation entre état réduit et incompatibilité avec un liant vitreux. Nous avons mesuré l'écart relatif entre le MdR d'une barrette du produit de référence et celui de produits élaborés dans des conditions réductrices, les deux barrettes étant obtenues dans chaque cas simultanément (voir Tableau 3). La barrette de référence a une densité de 2,05 environ et la barrette du produit alumine-zircone est constituée de façon à respecter la même fraction volumique de grains de numéro F60. Les deux barrettes sont ensuite formées dans les mêmes conditions de pressage et de cuisson, avec les mêmes quantités de liant.

TABLEAU 3

| N° exemple | 1* | 2* | 3* | 4* | Réf. |
|---|---|---|---|---|---|
| Carbone (ppm) | 180 | 145 | 200 | 220 | - |
| $H_2$ (cm$^3$/100g) | 82 | 48 | 73 | 60 | - |
| MdR, écart relatif (par rapport à la référence) | -36% | -24% | -21% | -33% | 0% |

Tous ces exemples ont des valeurs de MdR nettement amoindries par rapport à la référence (chute de plus de 20%). La cuisson des barrettes a pour effet de faire réagir fortement les grains réduits avec le liant silicaté (phénomène de bullage) et d'affecter les espèces réduites contenues dans les grains. L'observation directe des faciès de rupture des barrettes montre que l'effet de bullage est largement responsable de l'affaiblissement de la liaison.

Les barrettes obtenues sont ainsi significativement moins résistantes, ce qui se traduit à l'application au moins par une usure prématurée de la meule (déchaussement des grains), voire à des écarts significatifs aux spécifications de densité voulues (gonflement).

Ainsi, les grains alumine-zircone réduits cuits en meules vitrifiées souffrent d'une dégradation mécanique (due au seul traitement thermique), à laquelle s'ajoute l'effet de bullage à l'interface du liant.

De façon analogue, la préparation des pièces réfractaires à matrice d'alumine tabulaire à partir des grains alumine-zircone des exemples 1 et 2 (taille F24 et représentant 15% de la masse des barrettes avant cuisson) se solde par des fissurations rédhibitoires et de faibles tenues mécaniques. Cet effet est clairement imputable à une réoxydation très prononcée pendant le cycle de cuisson au-delà de 600°C comme le montrent des études dilatométriques (avec typiquement 1,5% d'expansion volumique brutale).

Nous avons étudié également le comportement de grains obtenus par oxydation du liquide en fusion correspondant aux exemples 9, 10, 11 et 12. Ces grains présentent un taux de carbone inférieur à 100 ppm et des teneurs en espèces réduites (au sens du test d'attaque acide) très basses. Tous ces matériaux présentent cependant une porosité importante, et ce, non seulement sur les écailles de produit, telles qu'elles sont coulées de manière préférentielle par l'homme de l'art, mais sur les grains eux-mêmes : nous donnons dans le Tableau 4 les chiffres de porosité évalués par la méthode décrite ci-dessous pour des grains de numéro F24, 60 et 100, et plus précisément respectivement les tranches granulométriques [710-850μm], [250-300μm] et [106-180μm].

TABLEAU 4

| N° exemple | 9* | 10* | 11* | 12* |
|---|---|---|---|---|
| Carbone (ppm) | 40 | 20 | 30 | 45 |
| $H_2$ (cm$^3$/100g) | 16 | 14 | 14 | 7 |
| Porosité (nb pores > 20 μm / grain) grain F24 | 6,2 | 11 ,7 | 7,2 | 6,2 |
| Porosité (nb pores > 20 μm / grain) grain F60 | 2,1 | 2,8 | 2,6 | 3,2 |
| Porosité (nb pores > 20 μm / grain) grain F100 | 1,1 | 1,1 | 1,1 | 1,3 |

Nous avons vu en introduction que la littérature indique que les produits élaborés en conditions plus oxydantes donnent lieu à des résultats moins favorables que les produits réduits pour des applications en meules organiques et abrasifs appliqués (nous avons trouvé que, pour le test d'impact, le produit 10* donne 37 et le produit 11* donne 45). Il est probable que l'oxydation joue un rôle défavorable par une moindre stabilisation de la zircone sous forme quadratique et par l'obtention d'espaces interlamellaires ou inter-fibres moins fins dans les colonies eutectiques. Cependant, nous pensons que la moindre performance mécanique des produits oxydés à l'élaboration par fusion est due essentiellement à leur porosité. En effet, chaque pore est à considérer comme une zone de fragilisation du grain, de concentration de contraintes, qui peut être à l'origine de fractures. Sans vouloir être liés à une théorie quelconque, il est probable que les élaborations oxydantes conduisent à une plus grande incorporation de gaz et, partant, à plus de dégagements gazeux (et donc de pores) à la solidification. On s'aperçoit en effet dans le Tableau 4 que les produits élaborés dans des conditions de fusion oxydantes ont tendance à avoir une porosité élevée et ce de façon large au moins sur l'étendue des numéros de grains considérés. Pour éviter les problèmes liés à cette porosité et rencontrés à l'application, nous avons choisi d'écarter les grains présentant une porosité supérieure à 6 pour des grains de numéro F24, à 2 pour des grains de numéro F60 et à 1 pour des grains de numéro F100 (résultats exprimés en nombre de pores de diamètre circonscrit supérieur à 20 μm par grain).

Comme pour les tests précédents, nous avons traité tous les grains conformes à l'invention à 900°C pendant 4 heures avant de tester leur ténacité et leur tenue au test d'impactage. L'ensemble des résultats est exprimé dans le Tableau 5.

TABLEAU 5

| N° exemple | 5 | 6 | 7 | 8 | Réf. |
|---|---|---|---|---|---|
| Carbone (ppm) | 60 | 45 | 95 | 50 | - |
| $H_2$ (cm$^3$/100g) | 30 | 21 | 44 | 26 | - |
| Porosité (nb pores > 20 μm / grain) F24 | 1,1 | 5 | 2,5 | 2,3 | - |
| Porosité (nb pores > 20 μm / grain) F60 | 1,5 | 0,5 | 1,7 | 0,7 | - |
| Porosité (nb pores > 20 μm / grain) F100 | 0,2 | 0,5 | 0,9 | 0,8 | - |
| Après calcination | | | | | |
| Test d'impact, F24 (% refus) | 58 | 57 | 66 | 57 | 50 |
| Test d'impact, F60 (% refus) | 68 | 57 | 78 | 77 | 71 |
| Test d'impact, F100 (% refus) | 60 | 67 | 63 | 62 | 75 |
| Ténacité par indentation (MPa.m$^{1/2}$) | 4,0 | 4,2 | 4,3 | 4,1 | 2,7 |

Les grains selon l'invention présentent ainsi des performances au moins comparables et souvent supérieures au produit de référence. On bénéficie bien des propriétés de ténacité supérieures des matériaux d'alumine-zircone. La structure des produits de l'invention à 42% environ de zircone reste proche d'un eutectique bien formé, avec à l'intérieur des colonies eutectiques un espacement interlamellaire entre la zircone et l'alumine fin, et des joints de grains plus ou moins développés selon la teneur en additifs stabilisants et en impuretés. Les produits de l'invention présentent bien les caractéristiques de compacité requises. L'étude de la porosité a permis de vérifier qu'une proportion importante (au moins 25% mais typiquement 90% dans les exemples cités) des grains de l'invention ne présente aucune microfissure après calcination. Par microfissure, on entendu une fissure de longueur > 30μm et de largeur > 3μm. Cette mesure est faite avec un microscope optique sur les mêmes polissages que ceux utilisés pour évaluer la porosité.

Les stabilisants donnent respectivement pour les grains des exemples N° 6, 7 et 8 les teneurs en zircone monoclinique suivantes : 5%, 46% et 50% (contre 54% pour l'exemple N° 5 sans stabilisant). Ces valeurs sont proches de celles obtenues sur les produits "classiques" réduits pour lesquels on obtient respectivement 0% pour l'exemple 2 et 51 % pour l'exemple sans stabilisant.

Ces valeurs ont été obtenues par une méthode de diffraction des rayons X, en analysant directement des polissages sur grains orientés au hasard (ici du grain F24), donc hors effet de déstabilisation de la zircone due à un broyage en poudre (comme c'est le cas des méthodes conventionnelles). On effectue ensuite de façon classique le rapport des aires sous pics des deux pics de la zircone monoclinique (aux petits angles, $2\theta = 28,4°$ et $31,4°$) sur la totalité des aires sous pics des trois pics de la zircone (les deux susmentionnés ainsi que le pic à $2\theta = 30,3°$ correspondant à la zircone stabilisée). Ce dernier pic est interprété comme dû à la zircone stabilisée sous forme quadratique, mais il n'est pas exclu que certains produits de l'invention contiennent une zircone stabilisée sous forme cubique. La différenciation peut se faire en étudiant la spectre de diffraction des rayons X à des angles supérieurs et nous n'avons pas détecté de forme cubique sur les échantillons considérés ici. On donne la teneur en zircone monoclinique par la formule : (Am1+Am2) / (Am1 +Am2+0,8*At) où Am1 et Am2 désignent les aires sous pics de la phase monoclinique et At l'aire sous pic de la phase stabilisée.

L'effet bénéfique dans les applications abrasives de la stabilisation de la zircone est bien documenté (cf US-A-4 457 767 et DE-C-4306966) ; cet effet est tout aussi désirable pour les applications réfractaires pour lesquelles une minimisation des transformations de la zircone (donc des contractions et dilatations) au cyclage thermique est un atout important. Ces faits nous conduisent à préférer les modes de réalisation de l'invention stabilisés à l'oxyde d'yttrium, et dans une moindre mesure à l'oxyde de titane.

Les grains de l'invention sont également stables thermiquement. Cette propriété les rend donc aptes à une mise en forme avec des liants à base d'oxydes, comme les liants vitreux des meules ou les matrices d'oxydes des réfractaires blancs. Des barrettes à liant vitreux réalisées avec des grains de l'invention stabilisés à l'oxyde d'yttrium (exemple 6) et à l'oxyde de titane (exemple 7) donnent respectivement des modules de rupture qui sont seulement inférieurs de 19 et 14% à celui de la référence. Cette légère tendance à des valeurs inférieures est due naturellement à la présence de zircone par rapport à la référence, ce qui a naturellement pour effet d'abaisser la valeur du module de rupture (sans que cela soit préjudiciable dans les limites annoncées). Les valeurs sur les produits revendiqués restent dans tous les cas très acceptables ; les effets de bullage tels qu'observés sur faciès de rupture sont d'ailleurs minimes.

Des meules circulaires ont également été réalisées, qui donnent des vitesses d'usure en tant que telles (à vitesse d'enlèvement de matière donnée) très diminuées par rapport au grain de référence (longévité de la nouvelle meule), comme l'ont montré des résultats d'essais réalisés avec une meule de dureté la par usinage d'un acier 52100 norme AISI typiquement utilisé pour l'usinage des cages de roulements à billes.

A force constante (donnée entre parenthèses en N/mm de largeur de meule), les vitesses d'usure mesurées ont été :

| Vitesse d'usure avec grains selon l'invention ($mm^3$/mm/s) | Vitesse d'usure avec grains de référence ($mm^3$/mm/s) |
|---|---|
| 0,044 (16,1) | 0,126 (17,0) |
| 0,091 (18,4) | 0,250 (18,3) |
| 0,187 (20,4) | 0,516 (20,6) |

Nous retiendrons donc essentiellement la valeur de 100 ppm de carbone comme étant la limite en deçà de laquelle les grains sont compatibles avec les liants des meules vitrifiées. La teneur en espèces réduites telle qu'indiquée par le test d'attaque acide se révèle un indicateur supplémentaire : le bas niveau d'hydrogène est une garantie supplémentaire de très faible réactivité avec les liants vitreux.

Quant au cas des applications réfractaires, la fabrication de barrettes constituées de grains de l'exemple 6 dans une matrice d'alumine tabulaire donne lieu à une bonne tenue mécanique ainsi qu'à une courbe de dilatation thermique beaucoup plus régulière (exempte de pic d'oxydation) contrairement aux produits classiques. Les faibles niveaux de porosité ouverte et de fissuration des grains de l'invention lui procurent par ailleurs une bonne résistance à la corrosion pour les applications sidérurgiques.

Exemples 13-23 (produits à 25% environ de zircone)

On a eu recours pour ces exemples aux mêmes modes opératoires de préparation et aux mêmes essais que ceux décrits à propos des exemples 1-12.

L'ensemble des données d'analyse chimique et d'oxydo-réduction est rassemblé dans le Tableau 6.

**TABLEAU 6**

| Exemples | 13* | 14* | 15* | 16* |
|---|---|---|---|---|
| Nature du produit | Réduit sans ajout | Réduit avec ajout de $Y_2O_3$ | Réduit avec ajout de $TiO_2$ | Réduit avec ajout de MgO |
| $ZrO_2$ (% masse) | 24,5 | 27,4 | 26,2 | 24,6 |
| $SiO_2$ (% masse) | 0,15 | 0,14 | 0,16 | 0,16 |
| $Na_2O$ (% masse) | 0,11 | 0,09 | <0,05 | 0,14 |
| $Y_2O_3$ (% masse) | / | 0,49 | / | / |
| $TiO_2$ (% masse) | / | / | 1,81 | / |
| MgO (% masse) | / | / | / | 1,05 |
| $Al_2O_3$ (% masse) | complément | complément | complément | complément |
| Carbone (ppm) | 250 | 180 | 260 | 200 |
| $H_2$ ($cm^3$/100g) | 85 | 81 | 72 | 56 |
| Ténacité par indentation après calcination (900°C-4h) ($MPa.m^{1/2}$) | Multifissuration | 2,1 | Multifissuration | 2,1 |

| Exemples | 17 | 18 | 19 |
|---|---|---|---|
| Nature du produit | Selon l'invention sans ajout | Selon l'invention avec ajout de $Y_2O_3$ | Selon l'invention avec ajout de $TiO_2$ |
| $ZrO_2$ (% masse) | 29,7 | 33,6 | 27,1 |
| $SiO_2$ (% masse) | 0,19 | 0,17 | 0,53 |
| $Na_2O$ (% masse) | 0,15 | 0,07 | 0,08 |
| $Y_2O_3$ (% masse) | / | 0,52 | / |
| $TiO_2$ (% masse) | / | / | 1,42 |
| MgO (% masse) | / | / | / |
| $Al_2O_3$ (% masse) | complément | complément | complément |
| Carbone (ppm) | 65 | 35 | 65 |
| $H_2$ ($cm^3$/100g) | 5 | 14 | 38 |
| Ténacité par indentation après calcination (900°C-4h) ($MPa.m^{1/2}$) | 3,3 | 3,6 | 3,6 |
| Porosité (nb pores > $20\mu m$/grain) grain F24 | 2,1 | 3,7 | 2,1 |
| Porosité (nb pores > $20\mu m$/grain) grain F60 | 1,8 | 1,1 | 1,1 |
| Porosité (nb pores > $20\mu m$/grain) grain F100 | 0,5 | 0,6 | 0,7 |

| Exemples | 20* | 21* | 22* | 23* |
|---|---|---|---|---|
| Nature du produit | Poreux sans ajout | Poreux avec ajout de $Y_2O_3$ | Poreux avec ajout de $TiO_2$ | Poreux avec ajout de MgO |
| $ZrO_2$ (% masse) | 31,3 | 29,7 | 28,1 | 23,7 |
| $SiO_2$ (% masse) | 0,23 | 0,21 | 0,96 | 0,22 |
| $Na_2O$ (% masse) | 0,14 | 0,12 | 0,15 | 0,22 |
| $Y_2O_3$ (% masse) | / | 0,5 | 0,25 | / |
| $TiO_2$ (% masse) | / | / | 1,07 | / |
| MgO (% masse) | / | / | / | 1,08 |
| $Al_2O_3$ (% masse) | complément | complément | complément | complément |
| Carbone (ppm) | 40 | 35 | 40 | 75 |
| $H_2$ ($cm^3$/100g) | 1 | 9 | 3 | 8 |
| Porosité (nb pores > $20\mu m$/grain) grain F24 | 6,2 | 6,2 | 8,6 | 7,0 |

* : exemple en dehors de l'invention.

**EP 1 149 060 B1**

Note concernant le test de détermination de la ténacité par indentation :

Dans le cas des produits à 25% environ de zircone, la structure n'étant plus uniquement composée de colonies eutectiques, on préfère indenter dans les zones où les structures sont les plus fines, c'est-à-dire les zones de première solidification (zone de peau) là où la solidification n'a pas dissocié les plages de corindon primaire et les colonies eutectiques. Ce sont ces zones qui donnent en effet la meilleure lecture de ténacité. Les écarts en ténacité après calcination entre produits réduits et de l'invention sont encore plus marqués hors de cette zone de peau, là où se forment les cellules eutectiques et où ce concentrent les espèces réduites.
Nous avons donc trouvé un nouveau type de grain fondu alumine-zircone :

- compact (donc résistant mécaniquement puisqu'il bénéficie de la ténacité intrinsèque des matériaux alumine-zircone)
- peu sensible à l'oxydation (stable thermiquement), et cela indépendamment du fait que les grains contiennent ou non un stabilisateur de la zircone.

Ces propriétés destinent le produit de l'invention en particulier à une utilisation comme grain abrasif (en particulier dans les meules à liant minéral vitreux) ou comme grain réfractaire (dans des applications où la résistance à l'oxydation est désirable, en particulier dans les réfractaires blancs frittés) . Les grains de l'invention permettent ainsi de bénéficier dans ces applications des avantages des grains alumine-zircone, notamment de leur grande ténacité et de leur résistance à l'usure et à la corrosion.

**Revendications**

1. Grains d'alumine-zircone fondus présentant l'analyse chimique suivante, en % en masse :

$ZrO_2 + HfO_2$ : 10-60%
$Al_2O_3$ : 38 à 90%
$SiO_2$ : < 0,8%
Impuretés : < 1,2%

**caractérisés en ce qu'**ils présentent un état légèrement réduit tel que lesdits grains contiennent moins de 100 ppm de carbone, et présentent :

a) une porosité, définie par le nombre de pores d'une taille supérieure à 20 μm, au plus égale à 6 pour des grains de numéro F24 (norme FEPA F), 2 pour des grains de numéro F60 et 1 pour des grains de numéro F100, et
b) une ténacité d'au moins 2,5MPa.m$^{1/2}$ après calcination à 900°C sous air pendant 4 heures.

2. Grains selon la revendication 1, **caractérisés en ce qu'**ils présentent une résistance à l'impact après calcination à 900°C sous air pendant 4 heures, telle que définie par l'essai défini dans la description, au moins égale à 40 pour des grains de numéro F24, à 50 pour des grains de numéro F60 et à 60 pour des grains de numéro F100.

3. Grains selon la revendication 1 ou 2, **caractérisés en ce qu'**ils contiennent jusqu'à 10% en masse d'au moins un additif, cet ajout venant en substitution d'une partie de $Al_2O_3$.

4. Grains selon la revendication 3, **caractérisés en ce qu'**ils contiennent jusqu'à 3% en masse d'au moins un additif.

5. Grains selon l'une quelconque des revendications 1 à 4, **caractérisés en ce que** $ZrO_2 + HfO_2$ représentent 35 à 50% en masse et $Al_2O_3$ représente 48 à 65% en masse.

6. Grains selon les revendications 4 et 5, **caractérisés en ce que**
$ZrO_2 + HfO_2$ représentent 38-45% en masse, et
$SiO_2$ représente < 0,4% en masse.

7. Grains selon l'une quelconque des revendications 1 à 6, **caractérisés en ce qu'**ils contiennent moins de 50 ppm de carbone.

**8.** Grains selon l'une quelconque des revendications 1 à 7, **caractérisés en ce qu'**ils libèrent dans le test d'attaque acide défini dans la description, moins de 50 cm³ d'hydrogène par 100g de grains.

**9.** Grains selon la revendication 8, **caractérisés en ce qu'**ils libèrent moins de 25 cm³ d'hydrogène par 100 g de grains.

**10.** Grains selon l'une quelconque des revendications 1 à 9, **caractérisés en ce qu'**ils contiennent, comme additif, au moins l'un des oxydes suivants : oxyde d'yttrium, oxyde de titane et oxyde de magnésium.

**11.** Grains selon la revendication 10, **caractérisés en ce qu'**ils contiennent de l'oxyde d'yttrium.

**12.** Grains selon la revendication 10 ou 11, **caractérisés en ce qu'**ils contiennent de l'oxyde d'yttrium à raison de 0,3 à 2% en masse et/ou de l'oxyde de titane à raison de 1 à 3% en masse et/ou de l'oxyde de magnésium à raison de 1 à 2% en masse.

**13.** Grains selon l'une quelconque des revendications 1 à 12, **caractérisés en ce que** leur structure comprend pour l'essentiel des colonies eutectiques orientées dans lesquelles les espaces interlamellaires ou interfibres sont inférieurs à 4000 angströms.

**14.** Grains selon l'une quelconque des revendication 1 à 12, **caractérisés en ce qu'**au moins 25% d'entre eux ne comportent pas de microfissures.

**15.** Grains selon l'une quelconque des revendications 1 à 14, **caractérisés en ce que** leur numéro de grain va de F12 à F 120.

**16.** Outils abrasifs constitués de grains abrasifs liés par un liant ou déposés en couche sur un support souple et retenus par un liant, **caractérisés en ce qu'**au moins une partie des grains abrasifs sont tels que définis à l'une quelconque des revendications 1 à 15.

**17.** Outils selon la revendication 16, **caractérisés en ce que** ce sont des meules et **en ce que** le liant est un liant minéral vitreux.

**18.** Pièces réfractaires constituées de grains d'alumine-zircone incorporés dans une matrice, **caractérisées en ce que** les grains d'alumine-zircone sont au moins en partie tels que définis à l'une quelconque des revendications 1 à 15.

**19.** Pièces réfractaires selon la revendication 18, **caractérisées en ce que** les grains d'alumine-zircone sont incorporés dans une matrice à base d'oxydes.

**20.** Utilisation de pièces réfractaires selon la revendication 18 ou 19 dans la coulée continue de l'acier, en particulier comme plaques à tiroir.

**Claims**

**1.** Fused alumina-zirconia grits having the following chemical composition, in % by weight:

$ZrO_2 + HfO_2$:    10-60%
$Al_2O_3$:    38 to 90%
$SiO_2$:    < 0.8%
Impurities:    < 1.2%,

which are **characterized in that** they are in a slightly reduced state such that said grits contain less than 100 ppm carbon, and have:

a) a porosity, defined by the number of pores greater than 20 μm in size, of at most 6 for grits of F24 grit number (FEPA "F" standard), at most 2 for grits of F60 grit number and at most 1 for grits of F100 grit number;
b) a toughness of at least 2.5 MPa.m$^{1/2}$ after calcining at 900°C in air for four hours.

**2.** The grits as claimed in claim 1, **characterized in that** they have an impact strength after calcining at 900°C in air for four hours, as defined by the test defined in the description, of at least 40 for grits of F24 grit number, at least 50 for grits of F60 grit number and at least 60 for grits of F100 grit number.

**3.** The grits as claimed in either of claims 1 and 2, **characterized in that** they contain up to 10% by weight of at least one additive, this addition substituting part of the $Al_2O_3$.

**4.** The grits as claimed in claim 3, **characterized in that** they contain up to 3% by weight of at least one additive.

**5.** The grits as claimed in any one of claims 1 to 4, **characterized in that** $ZrO_2$ + $HfO_2$ represent from 35 to 50% by weight and $Al_2O_3$ represents from 48 to 65% by weight.

**6.** The grits as claimed in claims 4 and 5, **characterized in that**
$ZrO_2$ + $HfO_2$ represent 38-45% by weight and
$SiO_2$ represents <0.4% by weight.

**7.** The grits as claimed in any one of claims 1 to 6, **characterized in that** they contain less than 50 ppm of carbon.

**8.** The grits as claimed in any one of claims 1 to 7, **characterized in that**, in the acid etch test defined in the description, they give off less than 50 $cm^3$ of hydrogen per 100 g of grits.

**9.** The grits as claimed in claim 8, **characterized in that** they give off less than 25 $cm^3$ of hydrogen per 100 g of grits.

**10.** The grits as claimed in any one of claims 1 to 9, **characterized in that** they contain, as additive, at least one of the following oxides: yttrium oxide, titanium oxide and magnesium oxide.

**11.** The grits as claimed in claim 10, **characterized in that** they contain yttrium oxide.

**12.** The grits as claimed in claim 10 or 11, **characterized in that** they contain yttrium oxide in an amount from 0.3 to 2% by weight and/or titanium oxide in an amount from 1 to 3% by weight and/or magnesium oxide in an amount from 1 to 2% by weight.

**13.** The grits as claimed in any one of claims 1 to 12, **characterized in that** their structure essentially comprises oriented eutectic colonies in which the interlamellar or inter-fiber spaces are less than 4000 ångströms.

**14.** The grits as claimed in any one of claims 1 to 12, **characterized in that** at least 25% of them contain no microcracks.

**15.** The grits as claimed in any one of claims 1 to 14, **characterized in that** their grit number goes from F12 to F120.

**16.** Abrasive tools consisting of abrasive grits bonded by a binder or deposited as a layer on a flexible support and retained by a binder, **characterized in that** at least some of the abrasive grits are as defined in any one of claims 1 to 15.

**17.** The tools as claimed in claim 16, **characterized in that** they are wheels and **in that** the binder is a vitreous mineral binder.

**18.** Refractory components consisting of alumina-zirconia grits incorporated into a matrix, **characterized in that** the alumina-zirconia grits are, at least in part, as defined in any one of claims 1 to 15.

**19.** The refractory components as claimed in claim 18, **characterized in that** the alumina-zirconia grits are incorporated into an oxide-based matrix.

**20.** Use of refractory components as claimed in claim 18 or 19, in the continuous casting of steel, particularly as slide gate valve plates.

**Patentansprüche**

1. Schmelzgegossene Aluminiumoxid-Zirconiumoxid-Körner, die die folgende chemische Analyse in Massenprozent aufweisen:

$ZrO_2 + HfO_2$: 10-60%
$Al_2O_3$: 38 bis 90%
$SiO_2$: < 0,8%
Verunreinigungen: < 1,2%

**dadurch gekennzeichnet, dass** sie einen leicht reduzierten Zustand aufweisen, so dass die Körner weniger als 100 ppm Kohlenstoff enthalten und folgendes aufweisen:

a) eine durch die Anzahl der Poren mit einer Größe von über 20 µm definierte Porosität von höchstens 6 für Körner der Nummer F24 (Norm FEPA F), 2 für Körner der Nummer F60 und 1 für Körner der Nummer F100; und

b) eine Zähigkeit von wenigstens 2,5 MPa·m$^{1/2}$ nach 4 Stunden Calcinierung bei 900 °C an der Luft.

2. Körner gemäß Anspruch 1, **dadurch gekennzeichnet, dass** sie eine durch den in der Beschreibung definierten Versuch definierte Schlagzähigkeit nach 4 Stunden Calcinierung bei 900 °C an der Luft von wenigstens 40 für Körner der Nummer F24, 50 für Körner der Nummer F60 und 60 für Körner der Nummer F100 aufweisen.

3. Körner gemäß Anspruch 1 oder 2, **dadurch gekennzeichnet, dass** sie bis zu 10 Massenprozent wenigstens eines Additivs enthalten, wobei dieser Zusatz einen Teil des $Al_2O_3$ ersetzt.

4. Körner gemäß Anspruch 3, **dadurch gekennzeichnet, dass** sie bis zu 3 Massenprozent wenigstens eines Additivs enthalten.

5. Körner gemäß einem der Ansprüche 1 bis 4, **dadurch gekennzeichnet, dass** $ZrO_2 + HfO_2$ 35 bis 50 Massenprozent ausmachen und $Al_2O_3$ 48 bis 65 Massenprozent ausmacht.

6. Körner gemäß den Ansprüchen 4 und 5, **dadurch gekennzeichnet, dass** $ZrO_2 + HfO_2$ 38 bis 45 Massenprozent ausmachen und $SiO_2$ < 0,4 Massenprozent ausmacht.

7. Körner gemäß einem der Ansprüche 1 bis 6, **dadurch gekennzeichnet, dass** sie weniger als 50 ppm Kohlenstoff enthalten.

8. Körner gemäß einem der Ansprüche 1 bis 7, **dadurch gekennzeichnet, dass** sie in dem in der Beschreibung definierten Säureangriffstest weniger als 50 cm$^3$ Wasserstoff pro 100 g Körner freisetzen.

9. Körner gemäß Anspruch 8, **dadurch gekennzeichnet, dass** sie weniger als 25 cm$^3$ Wasserstoff pro 100 g Körner freisetzen.

10. Körner gemäß einem der Ansprüche 1 bis 9, **dadurch gekennzeichnet, dass** sie als Additiv wenigstens eines der folgenden Oxide enthalten: Yttriumoxid, Titanoxid und Magnesiumoxid.

11. Körner gemäß Anspruch 10, **dadurch gekennzeichnet, dass** sie Yttriumoxid enthalten.

12. Körner gemäß Anspruch 10 oder 11, **dadurch gekennzeichnet, dass** sie Yttriumoxid in einer Menge von 0,3 bis 2 Massenprozent und/oder Titanoxid in einer Menge von 1 bis 3 Massenprozent und/oder Magnesiumoxid in einer Menge von 1 bis 2 Massenprozent enthalten.

13. Körner gemäß einem der Ansprüche 1 bis 12, **dadurch gekennzeichnet, dass** ihre Struktur im Wesentlichen orientierte eutektische Kolonien umfasst, wobei die Zwischenräume zwischen den Lamellen oder Fasern kleiner als 4000 Ångström sind.

14. Körner gemäß einem der Ansprüche 1 bis 12, **dadurch gekennzeichnet, dass** wenigstens 25% von ihnen keine Mikrorisse aufweisen.

**15.** Körner gemäß einem der Ansprüche 1 bis 14, **dadurch gekennzeichnet, dass** ihre Komnummer von F12 bis F120 geht.

**16.** Schleifwerkzeuge, die aus Schleifkörnern bestehen, die durch ein Bindemittel miteinander verbunden sind oder als Schicht auf einem elastischen Träger abgeschieden sind und durch ein Bindemittel festgehalten werden, **dadurch gekennzeichnet, dass** wenigstens ein Teil der Schleifkörner solche sind, wie sie in einem der Ansprüche 1 bis 15 definiert sind.

**17.** Werkzeuge gemäß Anspruch 16, **dadurch gekennzeichnet, dass** es sich um Schleifkörper handelt und dass das Bindemittel ein glasartiges mineralisches Bindemittel ist.

**18.** Feuerfeste Teile, die aus Aluminiumoxid-Zirconiumoxid-Körnern bestehen, die in eine Matrix eingebaut sind, **dadurch gekennzeichnet, dass** die Aluminiumoxid-Zirconiumoxid-Körner wenigstens zum Teil solche sind, wie sie in einem der Ansprüche 1 bis 15 definiert sind.

**19.** Feuerfeste Teile gemäß Anspruch 18, **dadurch gekennzeichnet, dass** die Aluminiumoxid-Zirconiumoxid-Körner in eine Matrix auf Oxidbasis eingebaut sind.

**20.** Verwendung von feuerfesten Teilen gemäß Anspruch 18 oder 19 zum Stranggießen von Stahl, insbesondere als Schiebeplatten.